# FASCICULE DE BREVET EUROPEEN

(11) **EP 3 149 420 B1**
(45) Date de publication et mention de la délivrance du brevet: **13.02.2019**
(21) Numéro de dépôt: 16723526.6
(22) Date de dépôt: 18.04.2016
(51) Int. Cl.: F26B 3/02, C01B 32/05, F26B 5/14, C10L 5/44, C10L 5/46, C02F 11/12, C02F 11/18

(54) **PROCÉDÉ ET INSTALLATION DE SÉCHAGE PAR CARBONISATION HYDROTHERMALE ET PAR FILTRAGE**
VERFAHREN UND ANLAGE ZUM TROCKNEN MITTELS HYDROTHERMALER KARBONISATION UND FILTERUNG
METHOD AND FACILITY FOR DRYING BY MEANS OF HYDROTHERMAL CARBONIZATION AND FILTERING

(30) Priorité: 20.04.2015 FR 1553500
(43) Date de publication de la demande: 05.04.2017
(73) Titulaire: Suez International, 92040 Paris la Défense Cedex (FR); TerraNova Energy GmbH, 40231 Düsseldorf (DE)
(72) Inventeur: PARDO, Pierre Emmanuel, 91400 Orsay (FR)
(74) Mandataire: IPAZ
(86) Numéro de dépôt international: PCT/IB2016/052204
(87) Numéro de publication internationale: WO 2016/170464

(56) Documents cités:
- WO-A1-2014/178028
- DE-A1-102011 055 986
- DE-A1-102013 013 724

## Description

### Domaine technique

La présente invention se rapporte au domaine du traitement thermique d'un produit à déshydrater tel que de la boue issue d'une filière de traitement d'eaux usées.

La présente invention concerne plus particulièrement un procédé de séchage d'un tel produit par carbonisation hydrothermale et par filtrage.

La présente invention concerne aussi une installation de séchage pour mettre en oeuvre un tel procédé. DE102013013724, qui est considéré comme l'art antérieur le plus proche, décrit un tel procédé et une telle installation.

### Etat de la technique antérieure

On connaît dans l'art antérieur un procédé de séchage combinant une opération de carbonisation hydrothermale et une opération de filtrage.

Le document WO 2015/008219 A1 décrit une installation comprenant un réacteur et un média filtrant montés en série. Un produit à déshydrater de type boue d'épuration peut être introduit dans le réacteur et y est maintenu sous pression à une température proche de 200°C de manière à réaliser ladite opération de carbonisation hydrothermale. Dans cette installation, le produit carbonisé sortant du réacteur est successivement refroidi, décompressé puis filtré.

Un inconvénient de ce type d'installations et procédés est qu'ils ne permettent pas de sécher un produit à déshydrater jusqu'à une valeur de siccité permettant une valorisation thermique optimale de ce produit, typiquement une siccité de 90%.

Un but de la présente invention est de proposer un procédé et une installation de séchage optimisant la consommation énergétique tout en étant capable de sécher un produit à déshydrater jusqu'à une valeur de siccité comprise entre 50 et 95% en fonction des besoins finaux.

### Exposé de l'invention

Cet objectif est atteint avec un procédé de séchage d'un produit à déshydrater, comprenant un déplacement du produit à déshydrater dans un trajet de traitement industriel, ledit trajet comprenant un réacteur et un échangeur de chaleur,
le trajet comprenant en outre un système de compression mécanique, le procédé comprenant :
- une étape de conditionnement thermique, de type carbonisation hydrothermale, au cours de laquelle on maintient le produit à déshydrater dans le réacteur à une pression de carbonisation P0, de préférence comprise entre 0,6 et 3,5 MPa, et à une température de carbonisation T0, de préférence comprise entre 140 et 300°C,
- une étape de transfert de chaleur au cours de laquelle, par l'intermédiaire de l'échangeur de chaleur, on transfère à un fluide caloporteur, par exemple de l'eau, au moins une partie de la chaleur contenue dans le produit à déshydrater ayant subi l'étape de conditionnement thermique,
- une étape de déshydratation mécanique au cours de laquelle :
   ∘ on introduit dans le système de compression mécanique le produit à déshydrater ayant subi l'étape de conditionnement thermique et l'étape de transfert de chaleur,
   ∘ on comprime le produit à déshydrater contenu dans le système de compression mécanique par application d'une pression de déshydratation P1, de préférence supérieure à 0,5 MPa, et
   ∘ on évacue une fraction liquide du produit à déshydrater, la fraction liquide étant séparée du produit à déshydrater sous l'effet de sa compression,
   et
- une étape de chauffage au cours de laquelle on transfère au produit à déshydrater au moins une partie de la chaleur contenue dans le fluide caloporteur ayant subi l'étape de transfert de chaleur, cette étape de chauffage étant réalisée conjointement ou après l'étape de déshydratation mécanique.

De préférence, le système de compression mécanique est un filtre-presse chauffant comprenant au moins deux plateaux et :
- lors de l'étape de déshydratation mécanique, la compression du produit à déshydrater est réalisée contre au moins un desdits plateaux, et
- lors de l'étape de chauffage, on fait circuler le fluide caloporteur ayant subi l'étape de transfert de chaleur dans des canaux formés dans au moins un desdits plateaux, cet au moins un desdits plateaux correspondant de préférence à l'au moins un desdits plateaux contre lequel on comprime le produit à déshydrater.

Un tel procédé de séchage permet de récupérer de l'énergie évacuée par l'échangeur de chaleur et d'utiliser cette chaleur récupérée pour sécher le produit à déshydrater dans le filtre-presse chauffant. Dans des procédés connus de l'état de la technique antérieure telle que représentée par le document WO 2015/008219 A1, cette énergie évacuée est perdue. Par conséquent, la présente invention permet d'optimiser la consommation énergétique en réutilisant cette énergie évacuée.

En outre, l'utilisation d'un filtre-presse chauffant est particulièrement avantageuse pour sécher un produit carbonisé, c'est-à-dire ayant subi une étape de conditionnement thermique de type carbonisation hydrothermale.

En effet, le séchage par filtre-presse chauffant entraîne, de manière générale, des difficultés en termes :
- de transfert de chaleur depuis le ou les plateaux chauffants jusqu'au produit à déshydrater contenu dans le filtre-presse chauffant, et
- d'évacuation de la vapeur d'eau générée dans le filtre-presse chauffant lors d'un tel séchage.

Lorsque le produit déshydraté est une boue d'épuration entrant dans le filtre-presse chauffant avec une siccité de 20%, la durée de chauffage requise pour atteindre une siccité de 90% peut s'avérer extrêmement longue, typiquement douze heures. Ainsi, le dimensionnement d'un filtre-presse chauffant est davantage conditionné par sa fonction de séchage que par sa fonction de filtration. Cela se traduit par une mise en oeuvre relativement rare du séchage par filtre-presse chauffant.

Toutefois, lorsque la quantité d'eau à évaporer est faible, ce phénomène est minimisé. A cet égard, il est avantageux de mettre en oeuvre un filtre-presse chauffant pour sécher un produit carbonisé lors d'une étape préalable de carbonisation hydrothermale, le produit carbonisé introduit dans le filtre-presse chauffant pouvant avoir une siccité comprise entre 50 et 65%.

La consommation thermique d'un filtre-presse chauffant est de l'ordre de 1000 kWh/tEE pour une sécher une boue ayant environ 20% de siccité, dont environ 15% provient de l'étape de chauffage elle-même. Dans le présent procédé, on estime que la consommation pour sécher une boue ayant environ 65% se siccité est de l'ordre de 363 kWH/tMS. En estimant une énergie disponible en sortie du réacteur (température du produit carbonisé) de 175-350 kWh/tMS, il est possible de couvrir les besoins énergétiques pour réaliser l'étape de chauffage.

De préférence, le produit à déshydrater est une boue d'épuration issue d'un traitement d'eaux usées.

Avantageusement, on peut réaliser l'étape de transfert de chaleur en faisant circuler :
- le fluide caloporteur ainsi que le produit à déshydrater dans l'échangeur de chaleur, et
- le fluide caloporteur dans une boucle de circulation, de préférence fermée, passant par l'échangeur de chaleur, le fluide caloporteur étant mis en circulation dans la boucle de circulation par pilotage d'une pompe de circulation,
et on peut piloter la pompe de circulation et/ou l'échangeur de chaleur pour abaisser la température du produit à déshydrater jusqu'à une température de filtration T1, de préférence inférieure à 90°C, de préférence comprise entre 50 et 70°C.

D'une part, une telle température de filtration T1 est compatible avec certaines technologies de filtre-presse chauffant, en particulier avec les matériaux de membrane de filtre-presse chauffant à membrane.

D'autre part, une telle température de filtration T1 optimise la filtrabilité du filtre-presse chauffant et la consommation énergétique de cet équipement.

Selon une caractéristique avantageuse, on peut stocker dans un ballon au moins une partie du fluide caloporteur ayant subi l'étape de transfert de chaleur, et le fluide caloporteur utilisé lors de l'étape de chauffage est, au moins en partie, prélevé dans ce ballon.

Un tel ballon permet de stocker une partie au moins de la chaleur requise pour réaliser l'étape de chauffage avec le filtre-presse chauffant.

Un tel stockage est particulièrement avantageux compte-tenu de la nature de l'opération de carbonisation hydrothermale, qui peut être continue ou discontinue, et de la nature discontinue du fonctionnement du filtre-presse chauffant.

Selon une autre caractéristique avantageuse, on peut réchauffer le fluide caloporteur avant son utilisation dans l'étape de chauffage par l'intermédiaire d'une source de chaleur additionnelle, par exemple une chaudière.

Une telle source de chaleur additionnelle permet de compléter le besoin du filtre-presse chauffant pour réaliser l'étape de chauffage, en fonction de la taille du ballon.

Avantageusement, lors de l'étape de déshydratation mécanique, on peut mettre en dépression un espace intérieur du système de compression mécanique accueillant le produit à déshydrater et on peut canaliser les gaz ou vapeurs ainsi extraits vers un système de traitement de buées.

Un tel procédé permet ainsi de gérer les odeurs émises par la mise en oeuvre du filtre-presse chauffant, en particulier lorsque le produit à déshydrater est une boue d'épuration.

Selon encore une autre caractéristique avantageuse, on paramètre de préférence une durée de chauffage D0, la durée de chauffage D0 correspondant à la durée de mise en oeuvre de l'étape de chauffage, de sorte que la siccité du produit à déshydrater contenu dans le système de compression mécanique atteigne ou dépasse une siccité finale Sf, de préférence comprise entre 50 et 95%, à la fin de cette étape de chauffage.

Une telle caractéristique permet de sécher le produit à déshydrater en fonction des besoins finaux, et d'optimiser ainsi la consommation énergétique du procédé.

La présente invention concerne aussi une installation de séchage comprenant :
- un réacteur agencé pour stocker le produit à déshydrater et le maintenir à une pression de carbonisation P0, de préférence comprise entre 0,6 et 3,5 MPa, et à une température de carbonisation T0, de préférence comprise entre 140 et 300°C,
   et
- un échangeur de chaleur agencé pour transférer à un fluide caloporteur au moins une partie de la chaleur contenue dans le produit à déshydrater sortant du réacteur,
caractérisée en ce qu'elle comprend en outre :
- un système de compression mécanique comportant :
   o un espace intérieur agencé pour recevoir le produit à déshydrater,
   o un moyen de compression, par exemple une membrane, apte à comprimer le produit à déshydrater contenu dans le système de compression mécanique,
   o une sortie d'évacuation de filtrat agencée pour évacuer une fraction liquide du produit à déshydrater lors de sa compression,
- des moyens de chauffage agencés pour transférer au produit à déshydrater, à l'intérieur du système de compression mécanique ou en aval du système de compression mécanique, au moins une partie de la chaleur contenue dans le fluide caloporteur en provenance de l'échangeur de chaleur.

De préférence, le système de compression mécanique est un filtre-presse chauffant comprenant au moins deux plateaux, le moyen de compression étant agencé pour comprimer contre au moins un desdits plateaux le produit à déshydrater contenu dans le filtre-presse chauffant, et au moins un desdits plateaux comprend des canaux aptes à recevoir un liquide de chauffage, l'installation étant agencée pour que ce liquide de chauffage soit constitué, au moins en partie, du fluide caloporteur en provenance de l'échangeur de chaleur, les moyens de chauffage comprenant lesdits canaux.

Selon une caractéristique avantageuse, l'installation peut comprendre en outre une source de chaleur additionnelle apte à réchauffer le fluide caloporteur avant son arrivée dans les moyens de chauffage.

Selon une autre caractéristique avantageuse, l'installation peut comprendre en outre un ballon agencé pour stocker, au moins en partie, le fluide caloporteur sortant de l'échangeur de chaleur, en amont du système de compression mécanique.

Les avantages énoncés plus haut s'appliquent aussi à une telle installation.

### Description des figures et modes de réalisation

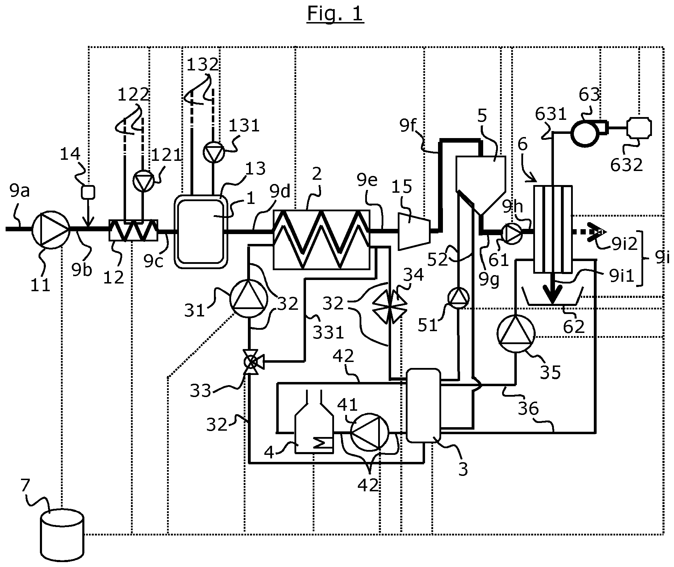

D'autres avantages et particularités de l'invention apparaîtront à la lecture de la description détaillée de mises en oeuvre et de modes de réalisation nullement limitatifs, et de la FIGURE 1 annexée qui est une vue schématique d'une installation de séchage selon l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

La FIGURE 1 illustre un mode de réalisation préféré de l'invention.

Suivant ce mode de réalisation, l'installation comprend un trajet de traitement industriel au sein duquel est déplacé un produit à déshydrater, par exemple de la boue d'épuration.

Par produit à déshydrater, on entend de préférence un produit pâteux ou liquide, de préférence une boue.

Par déshydratation du produit, on entend la perte ou l'élimination (partielle ou totale) de l'eau de ce produit, par quelque procédé que ce soit.

Dans la description qui suit, le terme « boue » peut être remplacé par « produit à déshydrater ».

Ce trajet comprend différents éléments de canalisation de la boue ou conduites 9a-9i, ainsi que différents appareils ou dispositifs qui sont reliés entre eux par ces conduites 9a-9i.

La boue arrive par la conduite 9a, avec une siccité comprise par exemple entre 4 et 25%, dans une pompe 11 qui met la boue en pression. La sortie de la pompe 11 est reliée à un moyen de chauffage 12 par la conduite 9b.

Le moyen de chauffage 12 est d'un type apte à réchauffer la boue par transfert thermique direct ou indirect en amont ou à l'intérieur d'un réacteur 1 au sein duquel on réalise une étape de conditionnement thermique (qui est typiquement une opération de carbonisation hydrothermale). Ce moyen de chauffage 12 peut réaliser un transfert thermique par l'intermédiaire d'un fluide thermique chaud, par exemple de l'huile, de la vapeur ou de l'eau surchauffée, ou encore par l'intermédiaire d'une injection directe de différents types de vapeur.

Dans l'exemple de la FIGURE 1, ce moyen de chauffage 12 réchauffe la boue par transfert thermique avec un fluide thermique chaud, par exemple de l'huile, mis en circulation dans une boucle 122 par une pompe 121. Ce moyen de chauffage 12 est de préférence un échangeur à tubes, dans lequel on fait circuler la boue et le fluide thermique à contre-courants.

Le moyen de chauffage 12 est relié au réacteur 1 par la conduite 9c.

De préférence, on injecte dans la boue un additif par tout moyen d'injection 14 approprié. L'additif peut consister en tout catalyseur apte à décomposer la matière organique, par exemple un acide tel que l'acide sulfurique. L'injection d'additif peut être réalisée en amont ou à l'intérieur du réacteur 1.

Le réacteur 1 est agencé pour stocker la boue et la maintenir à une pression de carbonisation P0 typiquement comprise entre 0,6 et 3,5 MPa, et à une température de carbonisation T0 typiquement comprise entre 140 et 300°C.

Dans un mode de mise en oeuvre préféré, la fonction unique du réacteur 1 est d'assurer un temps de résidence permettant de soumettre la boue à des réactions chimiques, typiquement d'hydrolyse. Ainsi, le réacteur 1 peut alternativement prendre la forme d'une chambre chicanée ou non, tubée ou non, ou par exemple d'un tube de longueur suffisante pour assurer le temps de séjour requis. Il peut être mélangé ou non, fonctionnant en batch ou en continu.

Le réacteur 1 est de préférence entouré d'une enveloppe 13 formant double paroi dans laquelle circule un fluide chaud, typiquement de l'huile, pour chauffer ou maintenir en température la boue contenue dans le réacteur 1. Le fluide chaud est par exemple mis en circulation dans la double paroi par l'intermédiaire d'une pompe 131 montée sur une boucle 132 reliée à la double paroi.

Alternativement, une injection de vapeur peut aussi permettre de maintenir le réacteur 1 en température ou en pression.

Les moyens pour mettre en pression la boue, chauffer la boue, la maintenir en température et la décomprimer peuvent revêtir toute configuration standard.

En particulier, l'étape de conditionnement thermique peut être réalisée dans différentes cuves fonctionnant en parallèle.

La boue carbonisée, c'est-à-dire ayant subi une opération de carbonisation hydrothermale en séjournant par exemple dans le réacteur 1 à la pression P0 et la température T0 de carbonisation, est acheminée par la conduite 9d jusqu'à un échangeur de chaleur 2. Typiquement, la température de la boue carbonisée, en sortie du réacteur 1, est supérieure à 100°C, par exemple comprise entre 100 et 120°C.

En sortie du réacteur 1 et en amont de l'échangeur de chaleur 2, un échangeur supplémentaire (non illustré) peut être mis en oeuvre pour récupérer de la chaleur contenue dans la boue pour les besoins du process de carbonisation hydrothermale.

L'échangeur de chaleur 2 est agencé pour transférer à un fluide caloporteur, ce fluide caloporteur étant de préférence de l'eau, au moins une partie de la chaleur contenue dans la boue en provenance du réacteur 1, afin de réaliser une étape de transfert de chaleur.

Le fluide caloporteur est mis en circulation par une pompe de circulation 31 dans une boucle de circulation 32 qui passe par l'échangeur de chaleur 2.

La boucle de circulation 32 passe aussi par un ballon 3 de sorte qu'au moins une partie du fluide caloporteur en provenance de l'échangeur de chaleur 2, réchauffé par transfert de chaleur avec la boue en provenance du réacteur 1, est stockée dans le ballon 3. De préférence, la boucle de circulation 32 est agencée pour que le fluide caloporteur sortant du ballon 3 et allant vers l'échangeur de chaleur 2 soit prélevé en partie basse du ballon 3, et pour que le fluide caloporteur en provenance de l'échangeur de chaleur 2 soit injecté dans le ballon 3 en partie haute (le haut et le bas étant dans la présente description définis de sorte qu'une direction allant du haut vers le bas est parallèle à l'attraction gravitationnelle terrestre). Ainsi, la fraction de fluide caloporteur réchauffée arrivant dans l'échangeur de chaleur 2 réchauffe progressivement le fluide caloporteur se trouvant dans le ballon 3 de haut en bas.

Le ballon 3 est dimensionné pour stocker la chaleur correspondant au besoin de chauffage d'un filtre-presse chauffant 6 monté en aval de l'échangeur de chaleur 2 (voir plus loin).

Le ballon 3 est de préférence prévu pour stocker de la chaleur par augmentation de sa température moyenne, et non pas par augmentation de son volume. En particulier, la température en partie haute du ballon 3 peut fluctuer entre 60 et 120°C et la température moyenne peut fluctuer entre 50 et 100°C, ce qui permet un gros stockage de chaleur.

De préférence, on pilote la pompe de circulation 31 et/ou l'échangeur de chaleur 2 pour abaisser la température de la boue sortant de l'échangeur de chaleur 2 jusqu'à une température de filtration T1, de préférence inférieure à 90°C, de préférence comprise entre 50 et 70°C. Pour ce faire, on peut par exemple :
- piloter la vitesse de la pompe de circulation 31, et/ou
- piloter l'échangeur de chaleur 2 en effectuant les étapes suivantes :
   - prélever une partie du fluide caloporteur sortant de l'échangeur de chaleur 2 et
   - réintroduire en amont de l'échangeur de la chaleur 2 (de préférence en amont de la pompe de circulation 31), par l'intermédiaire d'une vanne trois voies 33, cette partie prélevée étant acheminée vers la vanne 33 via un circuit annexe 331.

De préférence, le fluide caloporteur circule dans l'échangeur de chaleur 2 à contre-courant de la boue (à l'inverse de ce qui est illustré sur la figure 1).

De préférence, pour des raisons de sécurité, un aérocondenseur 34 est installé sur la boucle de circulation 32 afin d'assurer le refroidissement de l'échangeur de chaleur 2 en cas de non-utilisation du filtre-presse chauffant 6.

La boue sortant de l'échangeur de chaleur 2 arrive dans un outil de décompression 15 par la conduite 9e. Alternativement, l'outil de décompression 15 peut être placé en amont de l'échangeur de chaleur 2.

Dans le mode de réalisation de la FIGURE 1, la boue sortant de l'outil de décompression 15 arrive dans une cuve de stockage 5 par la conduite 9f. L'outil de décompression 15, par exemple une vanne, permet l'envoi sans vaporisation de la boue dans la cuve de stockage 5.

Selon un mode de réalisation avantageux, une boucle 52 relie le ballon 3 et la cuve de stockage 5. Cette boucle 52 est agencée pour faire circuler, par une pompe 51, une fraction du fluide caloporteur entre le ballon 3 et la cuve de stockage 5 en circuit fermé, afin de maintenir en température la boue se trouvant dans la cuve de stockage 5. Avantageusement, cette fraction de fluide caloporteur est prélevée en partie haute et réintroduite en partie basse du ballon 3.

Une pompe 61 reprend, par la conduite 9g, la boue se trouvant dans la cuve de stockage 5 pour l'introduire sous pression dans le filtre-presse chauffant 6.

Le filtre-presse chauffant 6 est d'un type apte à réaliser une étape de déshydratation mécanique et une étape de chauffage de la boue.

Le filtre-presse chauffant 6 comprend au moins deux plateaux, plaqués l'un contre l'autre, et un espace intérieur agencé pour recevoir la boue. L'espace intérieur est par exemple réalisé par une ou plusieurs chambres de filtration formées dans un ou plusieurs plateaux, par exemple sous la forme de creusures. Un exemple de plateaux est décrit dans le document WO 2004/024290 A1.

Pour réaliser l'étape de déshydratation mécanique, le filtre-presse chauffant 6 comprend un moyen de compression apte à comprimer contre au moins un desdits plateaux la boue contenue dans le filtre-presse chauffant 6. Ce moyen de compression est de préférence une membrane qui est soit intégrée à un plateau (la membrane étant alors par exemple en polypropylène), soit fixée sur un plateau (la membrane étant par exemple en caoutchouc). De préférence, le filtre-presse chauffant 6 comprend plusieurs paires de plateaux, un plateau de chaque paire comprenant une membrane et l'autre plateau de chaque paire comprenant une chambre de filtration. La compression en tant que telle est de préférence réalisée par une mise sous pression ou gonflage de la ou des membranes, par exemple par de l'air comprimé ou de l'eau sous une pression de déshydratation P1, de préférence supérieure à 0,5 MPa, typiquement 1,5 MPa.

Un tel moyen de compression est avantageux car il permet d'exercer une pression uniforme sur la boue contenue dans l'espace intérieur du filtre-presse chauffant 6.

L'étape de déshydratation mécanique comprend typiquement :
- une alimentation du filtre-presse chauffant 6 en boue par la pompe 61, par exemple avec une pression d'alimentation de 0,6 ou 0,7 MPa ; un piston maintien les plateaux serrés les uns contre les autres ;
- une préformation de la boue (appelée gâteau lors de cette étape) dans l'espace intérieur du filtre-presse chauffant 6 à cette pression d'alimentation ;
- un arrêt du pompage et un gonflage des membranes par exemple pendant une durée comprise entre 15 et 45 minutes ; lors de cette étape de compression, d'une part, une fraction liquide de la boue, appelée filtrat, est évacuée par une sortie d'évacuation de filtrat 9i2, la fraction liquide étant séparée de la boue sous l'effet de sa compression, d'autre part, la boue est comprimée contre au moins un plateau, de préférence l'au moins un plateau comprenant une chambre de filtration.

Lors de l'étape de déshydratation mécanique, on met en dépression, par exemple en actionnant un ventilateur 63, l'espace intérieur du filtre-presse chauffant 6 accueillant la boue, et on canalise, par une conduite 631, les gaz ou vapeurs ainsi extraits vers un système de traitement de buées 632.

Un ou plusieurs plateaux du filtre-presse chauffant 6, notamment le ou les plateaux comprenant une chambre de filtration, comportent des canaux aptes à recevoir un liquide de chauffage.

De préférence, l'installation est agencée pour que ce liquide de chauffage soit constitué, au moins en partie, du fluide caloporteur en provenance de l'échangeur de chaleur 2, et de préférence en provenance du ballon 3. Pour ce faire, on fait circuler par une pompe 35 le fluide caloporteur dans une boucle 36 reliant, en boucle fermée, le ballon 3 et les canaux. Comme illustré en FIGURE 1, le fluide caloporteur ainsi introduit dans les canaux est de préférence prélevé en partie haute du ballon 3, et le fluide caloporteur sortant du filtre-presse chauffant 6 est de préférence réintroduit en partie basse du ballon 3.

Ces dispositions permettent de réaliser une étape de chauffage au cours de laquelle on fait circuler le fluide caloporteur dans les canaux.

La mise en oeuvre de l'opération de carbonisation hydrothermale pouvant être discontinue, notamment lorsqu'elle est réalisée en batch, et la disponibilité de fluide caloporteur réchauffé lors de l'étape de transfert de chaleur pouvant en conséquence être insuffisante pour réaliser l'étape de chauffage, l'installation comprend de préférence une source de chaleur additionnelle 4 apte à réchauffer le fluide caloporteur avant son arrivée dans le filtre-presse chauffant 6. Ainsi, en cas de besoin, on réchauffe le fluide caloporteur avant sa mise en circulation dans les canaux par l'intermédiaire d'une telle source de chaleur additionnelle 4.

Cette source de chaleur additionnelle 4 est de préférence une chaudière, de préférence montée sur une boucle 42 montée sur le ballon 3 de manière à :
- prélever du ballon 3, de préférence en partie basse, une fraction de fluide caloporteur contenu dans le ballon 3, par actionnement d'une pompe 41,
- réchauffer la fraction de fluide caloporteur circulant dans la boucle 42 par la source de chaleur additionnelle 4, et
- réintroduire dans le ballon 3 cette fraction de fluide caloporteur ainsi réchauffée, de préférence en partie haute.

Avantageusement, on paramètre une durée de chauffage D0, la durée de chauffage D0 correspondant à la durée de mise en oeuvre de l'étape de chauffage, de sorte que la siccité du produit à déshydrater contenu dans le filtre-presse chauffant 6 atteigne ou dépasse une siccité finale Sf, de préférence comprise entre 50 et 95%, à la fin de cette étape de chauffage.

Lorsque les étapes de déshydratation mécanique et de chauffage sont terminées, la boue déshydratée contenue dans le filtre-presse chauffant 6, c'est-à-dire la boue ayant subie ces étapes, est évacuée du filtre-presse chauffant 6 par une sortie de débâtissage 9i1 vers un système de reprise 62.

Concernant le filtre-presse chauffant 6 et la mise en oeuvre des étapes de déshydratation mécanique et de chauffage, les moyens pour mettre en pression, filtrer, chauffer, mettre en dépression, reprendre la boue déshydratée, traiter les gaz ou vapeurs peuvent revêtir toute configuration standard. Ainsi, le filtre-presse chauffant 6 mis en oeuvre dans cette installation peut être de tout type connu, par exemple du type décrit dans le document WO 98/25684.

Le pilotage des différents appareils ou dispositifs décrits ci-dessus est assuré par tout organe de commande 7 approprié tel qu'une unité centrale d'ordinateur ou une console électronique munie de moyens de commande séparés pour chaque type d'appareil ou de dispositif tel que pompes, vannes, réacteur (par exemple température, pression), ventilateur (par exemple débit), etc. (un tel pilotage étant représenté par des traits en pointillés sur la FIGURE 1).

Dans un mode de réalisation non illustré, le filtre-presse chauffant 6 est remplacé par un système de compression mécanique tel qu'un filtre-presse simple (non illustré), ou par une presse à piston dont la sortie est dirigée vers des moyens de chauffage tel qu'un sécheur basse température (non illustré, et de préférence situé en aval du filtre-presse). Ce sécheur basse température peut être de type à bande, par exemple tel que commercialisé par la société STC. Un tel sécheur à bande permet de sécher de la boue avec une source de chaleur à basse température, typiquement inférieure à 90°C. Une installation suivant un tel mode de réalisation permet de chauffer la boue au sein d'un tel sécheur basse température en transférant de la chaleur récupérée (de préférence par l'échangeur de chaleur 2) dans la boue ayant subie l'étape de conditionnement thermique.

Bien sûr, l'invention n'est pas limitée aux exemples qui viennent d'être décrits et de nombreux aménagements peuvent être apportés à ces exemples sans sortir du cadre de l'invention tel que défini dans les revendications. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de séchage d'un produit à déshydrater, comprenant un déplacement du produit à déshydrater dans un trajet de traitement industriel (9a-9i, 11, 12, 1, 2, 15, 5, 61, 6), ledit trajet comprenant un réacteur (1) et un échangeur de chaleur (2),
ce trajet comprenant en outre un système de compression mécanique (6),
ce procédé comprenant :
- une étape de conditionnement thermique au cours de laquelle on maintient le produit à déshydrater dans le réacteur (1) à une pression de carbonisation P0, de préférence comprise entre 0,6 et 3,5 MPa, et à une température de carbonisation T0, de préférence comprise entre 140 et 300°C, et
- une étape de déshydratation mécanique au cours de laquelle :
∘ on introduit dans le système de compression mécanique (6) le produit à déshydrater ayant subi l'étape de conditionnement thermique et l'étape de transfert de chaleur,
∘ on comprime le produit à déshydrater contenu dans le système de compression mécanique (6) par application d'une pression de déshydratation P1, de préférence supérieure à 0,5 MPa, et
∘ on évacue une fraction liquide du produit à déshydrater, la fraction liquide étant séparée du produit à déshydrater sous l'effet de sa compression,
ledit procédé étant **caractérisé en ce qu'**il comprend :
- une étape de transfert de chaleur au cours de laquelle, par l'intermédiaire de l'échangeur de chaleur (2), on transfère à un fluide caloporteur au moins une partie de la chaleur contenue dans le produit à déshydrater ayant subi l'étape de conditionnement thermique, et
- une étape de chauffage au cours de laquelle on transfère au produit à déshydrater au moins une partie de la chaleur contenue dans le fluide caloporteur ayant subi l'étape de transfert de chaleur, cette étape de chauffage étant réalisée conjointement ou après l'étape de déshydratation mécanique.

2. Procédé selon la revendication 1, **caractérisé en ce que** le produit à déshydrater est une boue d'épuration issue d'un traitement d'eaux usées.

3. Procédé selon la revendication 1 ou 2, **caractérisé en ce que** le système de compression mécanique (6) est un filtre-presse chauffant comprenant au moins deux plateaux et **en ce que** :
- lors de l'étape de déshydratation mécanique, la compression du produit à déshydrater est réalisée contre au moins un desdits plateaux, et
- lors de l'étape de chauffage, on fait circuler le fluide caloporteur ayant subi l'étape de transfert de chaleur dans des canaux formés dans au moins un desdits plateaux.

4. Procédé selon l'une des revendications 1 à 3, **caractérisé en ce qu'**on réalise l'étape de transfert de chaleur en faisant circuler :
- le fluide caloporteur ainsi que le produit à déshydrater dans l'échangeur de chaleur (2), et
- le fluide caloporteur dans une boucle de circulation (32) passant par l'échangeur de chaleur (2), le fluide caloporteur étant mis en circulation dans la boucle de circulation (32) par pilotage d'une pompe de circulation (31),
et **en ce qu'**on pilote la pompe de circulation (31) et/ou l'échangeur de chaleur (2) pour abaisser la température du produit à déshydrater jusqu'à une température de filtration T1, de préférence inférieure à 90°C, de préférence comprise entre 50 et 70°C.

5. Procédé selon l'une des revendications 1 à 4, **caractérisé en ce qu'**on stocke dans un ballon (3) au moins une partie du fluide caloporteur ayant subi l'étape de transfert de chaleur, et **en ce que** le fluide caloporteur utilisé lors de l'étape de chauffage est, au moins en partie, prélevé dans ce ballon (3).

6. Procédé selon l'une des revendications 1 à 5, **caractérisé en ce qu'**on réchauffe le fluide caloporteur avant son utilisation dans l'étape de chauffage par l'intermédiaire d'une source de chaleur additionnelle (4).

7. Procédé selon l'une des revendications 1 à 6, **caractérisé en ce que**, lors de l'étape de déshydratation mécanique, on met en dépression un espace intérieur du système de compression mécanique (6) accueillant le produit à déshydrater et **en ce qu'**on canalise les gaz ou vapeurs ainsi extraits vers un système de traitement de buées (632).

8. Procédé selon l'une des revendications 1 à 7, **caractérisé en ce qu'**on paramètre une durée de chauffage D0, la durée de chauffage D0 correspondant à la durée de mise en oeuvre de l'étape de chauffage, de sorte que la siccité du produit à déshydrater contenu dans le système de compression mécanique (6) atteigne ou dépasse une siccité finale Sf, de préférence comprise entre 50 et 95%, à la fin de cette étape de chauffage.

9. Installation de séchage comprenant :
- un réacteur (1) agencé pour stocker le produit à déshydrater et le maintenir à une pression de carbonisation P0, de préférence comprise entre 0,6 et 3,5 MPa, et à une température de carbonisation T0, de préférence comprise entre 140 et 300°C,
et
- un système de compression mécanique (6) comportant :
o un espace intérieur agencé pour recevoir le produit à déshydrater,
o un moyen de compression apte à comprimer le produit à déshydrater contenu dans le système de compression mécanique (6),
o une sortie d'évacuation de filtrat (9i2) agencée pour évacuer une fraction liquide du produit à déshydrater lors de sa compression
**caractérisé en ce qu'**elle comprend en outre :
- un échangeur de chaleur (2) agencé pour transférer à un fluide caloporteur au moins une partie de la chaleur contenue dans le produit à déshydrater sortant du réacteur (1), et
- des moyens de chauffage agencés pour transférer au produit à déshydrater, à l'intérieur du système de compression mécanique (6) ou en aval du système de compression mécanique (6), au moins une partie de la chaleur contenue dans le fluide caloporteur en provenance de l'échangeur de chaleur (2).

10. Installation selon la revendication 9, **caractérisée en ce que** le système de compression mécanique (6) est un filtre-presse chauffant comprenant au moins deux plateaux, le moyen de compression étant agencé pour comprimer contre au moins un desdits plateaux le produit à déshydrater contenu dans le filtre-presse chauffant (6),
et **en ce qu'**au moins un desdits plateaux comprend des canaux aptes à recevoir un liquide de chauffage, l'installation étant agencée pour que ce liquide de chauffage soit constitué, au moins en partie, du fluide caloporteur en provenance de l'échangeur de chaleur (2), les moyens de chauffage comprenant lesdits canaux.

11. Installation selon la revendication 9 ou 10, **caractérisée en ce qu'**elle comprend en outre une source de chaleur additionnelle (4) apte à réchauffer le fluide caloporteur avant son arrivée dans les moyens de chauffage.

12. Installation selon la revendication 9 ou 11, **caractérisée en ce qu'**elle comprend en outre un ballon (3) agencé pour stocker, au moins en partie, le fluide caloporteur sortant de l'échangeur de chaleur (2), en amont du système de compression mécanique (6).

## Patentansprüche

1. Verfahren zum Trocknen eines zu entwässernden Produktes, welches eine Verlagerung des zu entwässernden Produktes in einer industriellen Behandlungsstrecke (9a-9i, 11, 12, 1, 2, 15, 5, 61, 6) umfasst, wobei die Strecke einen Reaktor (1) und einen Wärmetauscher (2) umfasst,
wobei diese Strecke weiterhin ein mechanisches Verdichtungssystem (6) umfasst,
wobei dieses Verfahren die folgenden Schritte umfasst:
- einen Wärmebehandlungsschritt, bei dem das zu entwässernde Produkt in dem Reaktor (1) einem Karbonisierungsdruck P0, vorzugsweise zwischen 0,6 und 3,5 MPa, und einer Karbonisierungstemperatur T0, vorzugsweise zwischen 140 °C und 300 °C ausgesetzt wird, und
- einen mechanischen Entwässerungsschritt, bei dem
o das zu entwässernde Produkt, das den Wärmebehandlungsschritt und den Wärmeübertragungsschritt durchlaufen hat, in das mechanische Verdichtungssystem (6) eingeführt wird,
o das in dem mechanischen Verdichtungssystem (6) enthaltene, zu entwässernde Produkt durch Beaufschlagung mit einem Verdichtungsdruck P1, vorzugsweise von mehr als 0,5 MPa verdichtet wird, und
o eine flüssige Fraktion des zu entwässernden Produktes abgeführt wird, wobei die flüssige Fraktion von dem zu entwässernden Produkt unter der Einwirkung von dessen Verdichtung getrennt wird,
wobei das Verfahren **dadurch gekennzeichnet ist, dass** es die folgenden Schritte umfasst:
- einen Wärmeübertragungsschritt, bei dem wenigstens ein Teil der Wärme, die in dem zu entwässernden Produkt enthalten ist, das den Wärmebehandlungsschritt durchlaufen hat, mittels des Wärmetauschers (2) auf eine Wärmeträgerflüssigkeit übertragen wird, und
- einen Erwärmungsschritt, bei dem wenigstens ein Teil der Wärme, die in der Wärmeträgerflüssigkeit enthalten ist, die den Wärmeübertragungsschritt durchlaufen hat, auf das zu entwässernde Produkt übertragen wird, wobei dieser Erwärmungsschritt gleichzeitig mit oder nach dem mechanischen Entwässerungsschritt durchgeführt wird.

2. Verfahren gemäss Anspruch 1, **dadurch gekennzeichnet, dass** es sich bei dem zu entwässernden Produkt um einen Klärschlamm aus einer Abwasserbehandlung handelt.

3. Verfahren gemäss Anspruch 1 oder 2, **dadurch gekennzeichnet, dass** es sich bei dem mechanischen Verdichtungssystem (6) um eine heizende Filterpresse handelt, die wenigstens zwei Platten umfasst, und dass
- die Verdichtung des zu entwässernden Produktes bei dem mechanischen Entwässerungsschritt gegen mindestens eine dieser Platten durchgeführt wird, und
- dass die Wärmeträgerflüssigkeit, die den Wärmeübertragungsschritt durchlaufen hat, beim dem Erwärmungsschritt durch Kanäle geleitet wird, die in wenigstens einer der Platten ausgebildet sind.

4. Verfahren gemäss einem der Ansprüche 1 bis 3, **dadurch gekennzeichnet, dass** der Wärmeübertragungsschritt durchgeführt wird durch Hindurchleiten
- der Wärmeträgerflüssigkeit sowie des zu entwässernden Produktes durch den Wärmetauscher (2), und
- der Wärmeträgerflüssigkeit durch eine Umlaufleitung (32), die durch den Wärmetauscher (2) führt, wobei die Wärmeträgerflüssigkeit in der Umlaufleitung (32) durch Ansteuerung einer Umlaufpumpe (31) in Umlauf gebracht wird,
und dass die Umlaufpumpe (31) und/oder der Wärmetauscher (2) zur Senkung der Temperatur des zu entwässernden Produktes bis auf eine Filtrationstemperatur T1, vorzugsweise unter 90 °C, vorzugsweise zwischen 50 °C und 70 °C angesteuert wird.

5. Verfahren gemäss einem der Ansprüche 1 bis 4, **dadurch gekennzeichnet, dass** wenigstens ein Teil der Wärmeträgerflüssigkeit, die den Wärmeübertragungsschritt durchlaufen hat, in einem Kolben (3) gespeichert wird, und dass die Wärmeträgerflüssigkeit, die bei dem Erwärmungsschritt verwendet wird, wenigstens teilweise aus diesem Kolben (3) entnommen wird.

6. Verfahren gemäss einem der Ansprüche 1 bis 5, **dadurch gekennzeichnet, dass** die Wärmeträgerflüssigkeit vor ihrer Verwendung in dem Erwärmungsschritt mittels einer zusätzlichen Wärmequelle (4) erwärmt wird.

7. Verfahren gemäss einem der Ansprüche 1 bis 6, **dadurch gekennzeichnet, dass** in einem Innenraum des mechanischen Verdichtungssystems (6), welches das zu entwässernde Produkt aufnimmt, bei dem mechanischen Entwässerungsschritt ein Unterdruck erzeugt wird und dass die auf diese Weise extrahierten Gase oder Dämpfe zu einem System zur Brüdenbehandlung (632) geleitet werden.

8. Verfahren gemäss einem der Ansprüche 1 bis 7, **dadurch gekennzeichnet, dass** eine Erwärmungsdauer D0 parametriert wird, wobei die Erwärmungsdauer D0 der Dauer der Durchführung des Erwärmungsschritts entspricht, so dass die Trockenheit des zu entwässernden Produktes, das in dem mechanischen Verdichtungssystem (6) enthalten ist, am Ende dieses Erwärmungsschritts eine endgültige Trockenheit Sf, vorzugsweise zwischen 50 % und 95 % erreicht oder überschreitet.

9. Trocknungsvorrichtung umfassend:
- einen Reaktor (1), der dazu eingerichtet, das zu entwässernde Produkt zu speichern und es bei einem Karbonisierungsdruck P0, vorzugsweise zwischen 0,6 und 3,5 MPa, und bei einer Karbonisierungstemperatur T0, vorzugsweise zwischen 140 °C und 300 °C zu halten,
und
- ein mechanisches Verdichtungssystem (6) mit:
o einem Innenraum, der dazu eingerichtet ist, das zu entwässernde Produkt zu empfangen,
o einem Verdichtungsmittel, das dazu geeignet ist, das in dem mechanischen Verdichtungssystem (6) enthaltene, zu entwässernde Produkt zu verdichten,
o einem Auslaß (9i2) für das Filtrat, der dazu eingerichtet ist, eine flüssige Fraktion des zu entwässernden Produktes bei dessen Verdichtung abzuführen,
**dadurch gekennzeichnet, dass** sie weiterhin Folgendes umfasst:
- einen Wärmetauscher (2), der dazu eingerichtet ist, wenigstens einen Teil der Wärme, die in dem zu entwässernden Produkt enthalten ist, das aus dem Reaktor (1) austritt, auf eine Wärmeträgerflüssigkeit zu übertragen, und
- Heizmittel, die dazu eingerichtet sind, im Innern des mechanischen Verdichtungssystems (6) oder stromabwärts von dem mechanischen Verdichtungssystem (6), wenigstens einen Teil der Wärme, die in der Wärmeträgerflüssigkeit aus dem Wärmetauscher (2) enthalten ist, auf das zu entwässernde Produkt zu übertragen.

10. Einrichtung gemäss Anspruch 9, **dadurch gekennzeichnet, dass** es sich bei dem mechanischen Verdichtungssystem (6) um eine heizende Filterpresse handelt, die wenigstens zwei Platten umfasst, wobei das Verdichtungsmittel dazu eingerichtet ist, um das in der heizenden Filterpresse (6) enthaltene, zu entwässernde Produkt gegen wenigstens einer der Platten zu pressen,
und dass wenigstens eine der Platten Kanäle umfasst, die dazu geeignet sind, eine Wärmeflüssigkeit aufzunehmen, wobei die Einrichtung dazu eingerichtet ist, dass diese Wärmeflüssigkeit wenigstens teilweise aus der Wärmeträgerflüssigkeit aus dem Wärmetauscher (2) besteht, wobei die Heizmittel die Kanäle umfassen.

11. Einrichtung gemäss Anspruch 9 oder 10, **dadurch gekennzeichnet, dass** sie weiterhin eine zusätzliche Wärmequelle (4) umfasst, die dazu geeignet ist, die Wärmeträgerflüssigkeit vor ihrer Ankunft in dem Heizmittel zu erwärmen.

12. Einrichtung gemäss Anspruch 9 oder 11, **dadurch gekennzeichnet, dass** sie weiterhin einen Kolben (3) umfasst, der dazu eingerichtet, stromaufwärts von dem mechanischen Verdichtungssystem (6) wenigstens einen Teil der aus dem Wärmetauscher (2) austretenden Wärmeträgerflüssigkeit zu speichern.

## Claims

1. A method for drying a product to be dehydrated, comprising displacement of the product to be dehydrated on an industrial treatment course (9a-9i, 11, 12, 1, 2, 15, 5, 61, 6), said course comprising a reactor (1) and a heat exchanger (2),
said course further comprising a mechanical compression system (6),
said method comprising:
- a step of thermal conditioning, during which the product to be dehydrated is maintained in the reactor (1) at a carbonization pressure P0, preferably of between 0.6 and 3.5 MPa, and at a carbonization temperature T0, preferably of between 140 and 300°C;
- a step of mechanical dehydration during which:
o the product to be dehydrated which has been subjected to the thermal conditioning step and the step of transfer of heat is introduced into the mechanical compression system (6);
o the product to be dehydrated contained in the mechanical compression system (6) is compressed by application of a dehydration pressure P1, preferably of more than 0.5 MPa; and
o a liquid fraction of the product to be dehydrated is discharged, the liquid fraction being separated from the product to be dehydrated under the effect of its compression;
**characterized in that** the method comprises:
a step of transfer of heat, during which, by means of the heat exchanger (2), transfer takes place to a heat transfer fluid of at least part of the heat contained in the product to be dehydrated which has been subjected to the thermal conditioning step;
- a heating step, during which transfer takes place to the product to be dehydrated of at least part of the heat contained in the heat transfer fluid which has been subjected to the step of transfer of heat, this heating step being carried out simultaneously with, or after, the mechanical dehydration step.

2. The method as claimed in claim 1, **characterized in that** the product to be dehydrated is a treatment sludge obtained from processing of waste water.

3. The method as claimed in claim 1 or 2, **characterized in that** the mechanical compression system (6) is a heating filter press comprising at least two plates, and **in that**:
- during the step of mechanical dehydration, the compression of the product to be dehydrated is carried out against at least one of said plates; and
- during the heating step, the heat transfer fluid which has been subjected to the step of transfer of heat is circulated in channels formed in at least one of said plates.

4. The method as claimed in one of claims 1 to 3, **characterized in that** the step of transfer of heat is carried out by circulating:
- the heat transfer fluid as well as the product to be dehydrated in the heat exchanger (2); and
- the heat transfer fluid in a circulation loop (32) passing via the heat exchanger (2), with the heat transfer fluid being circulated in the circulation loop (32) by control of a circulation pump (31),
and **in that** the circulation pump (31) and/or the heat exchanger (2) are controlled in order to lower the temperature of the product to be dehydrated to a filtration temperature T1 which is preferably lower than 90°C, and preferably between 50 and 70°C.

5. The method as claimed in one of claims 1 to 4, **characterized in that** storage takes place in a balloon (3) of at least part of the heat transfer fluid which has been subjected to the step of transfer of heat, and **in that** the heat transfer fluid used during the heating step is at least partly collected from this balloon (3).

6. The method as claimed in one of claims 1 to 5, **characterized in that** the heat transfer fluid is heated before it is used in the heating step by means of an additional source of heat (4).

7. The method as claimed in one of claims 1 to 6, **characterized in that**, during the mechanical dehydration step, an inner space of the mechanical compression system (6) which receives the product to be dehydrated is put under depression, and **in that** the gases or vapors thus extracted are channeled to a steam treatment system (632).

8. The method as claimed in one of claims 1 to 7, **characterized in that** a heating time D0 is parameterized, with the heating time D0 corresponding to the duration of implementation of the heating step, such that the dryness of the product to be dehydrated contained in the mechanical compression system (6) reaches or exceeds a final dryness Sf, preferably of between 50 and 95%, at the end of this heating step.

9. A drying installation comprising:
- a reactor (1) which is designed to store the product to be dehydrated and to maintain it at a carbonization pressure P0, preferably of between 0.6 and 3.5 MPa, and at a carbonization temperature T0, preferably of between 140 and 300°C; and
- a mechanical compression system (6) comprising:
o an inner space which is designed to receive the product to be dehydrated;
o a means for compression which can compress the product to be dehydrated contained in the mechanical compression system (6);
o a filtrate discharge outlet (9i2), which is designed to discharge a liquid fraction of the product to be dehydrated during its compression;
**characterized in that** it comprises:
o a heat exchanger (2) which is designed to transfer to a heat transfer fluid at least part of the heat contained in the product to be dehydrated output from the reactor (1),and
o heating means which are designed to transfer to the product to be dehydrated, inside the mechanical compression system (6) or downstream from the mechanical compression system (6), at least part of the heat contained in the heat transfer fluid obtained from the heat exchanger (2).

10. The installation as claimed in claim 9, **characterized in that** the mechanical compression system (6) is a heating filter press comprising at least two plates, the compression means being designed to compress the product to be dehydrated contained in the heating filter press (6) against at least one of said plates,
and **in that** at least one of said plates comprises channels which can receive a heating liquid, the installation being designed such that this heating liquid is constituted at least partly by the heat transfer fluid obtained from the heat exchanger (2), the heating means comprising said channels.

11. The installation as claimed in claim 9 or 10, **characterized in that** it also comprises an additional source of heat (4) which can heat the heat transfer fluid before it reaches the heating means.

12. The installation as claimed in claim 9 or 11, **characterized in that** it also comprises a balloon (3) which is designed to store at least partly the heat transfer fluid output from the heat exchanger (2), upstream from the mechanical compression system (6).
